# EUROPEAN PATENT APPLICATION

(11) **EP 4 813 497 A1**
(43) Date of publication of application: **30.09.2026**
(21) Application number: 25166202.9
(22) Date of filing: 26.03.2025
(51) Int. Cl.: B01D 53/02, B01D 53/04

(54) **FILTER ELEMENT AND FILTER DEVICE**

(71) Applicant: MANN+HUMMEL LIFE SCIENCES & ENVIRONMENT HOLDING SINGAPORE PTE. LTD., Singapore 139234 (SG)
(72) Inventor: WOITOLL, Ina, 139234 Singapore (SG); SCOPE, Andreas, 139234 Singapore (SG); THARVAL, Nilesh, 139234 Singapore (SG); MANZO, Gabriel, 139234 Singapore (SG)
(74) Representative: Mann + Hummel Intellectual Property

(57) **Abstract**

A filter element (2) for reversibly capturing CO₂ from ambient air (6) comprises a shaped flat support medium (8); and adsorber particles (9), configured to adsorb CO₂ from ambient air (6). The adsorber particles (9) are adhered to the shaped flat support medium (8), wherein the combination of the shaped flat support medium (8) with the adhered adsorber particles (9) is permeable to ambient air (6).

## Description

### Technical Field

The present disclosure relates to a filter element and a filter device, e.g. for direct air capture.

A need to effectively limit the rise of global surface temperature to well below 2°C is given by the Paris Agreement. This goal is achievable by emitting less climate-heating greenhouse gases to the atmosphere. A further possibility to weaken or reverse the temperature increase is to remove greenhouse gases from the atmosphere. A possible greenhouse gas, which may be removed, is carbon dioxide (CO₂). The technical process for removing CO₂ from the atmosphere is known as direct air capture (DAC).

### Prior art

During DAC, ambient air is moved by a fan through a filter. The filter may comprise particles, wherein the particles capture CO₂ from the ambient air, for example by adsorbing CO₂. Once the filter is saturated, heat may be applied to the filter to release the captured CO₂.

Known filters rely on porous sorbents that chemically or physically bind CO₂, e.g. in a packed bed. While these filters can achieve high capture rates, they often introduce airflow resistance, requiring more energy to push air through the filter. Additionally, moisture accumulation and repeated adsorption/desorption cycles can degrade the performance of these filters over time, further increasing operational demands. Further, sorbent beads used as loose filter material in a packed bed may be mechanically damaged due to gravitational forces and abrasion, thus impacting the adsorption process.

A known solution discloses a unit for separating gaseous carbon dioxide from air from ambient atmospheric air, by cyclic adsorption/desorption using adsorber elements with a sorbent material. Said sorbent material is a solid inorganic, or organic non-polymeric or polymeric support material functionalized on the surface. The adsorber elements are arranged parallel to each other forming fluid passages, and ambient air flows through the passages.

It is one object of the present disclosure to provide an improved filter for DAC.

### Disclosure of the invention

According to a first aspect, a filter element for reversibly capturing carbon dioxide, CO₂, from ambient air is proposed. The filter element comprises: a shaped flat support medium; and adsorber particles, configured to adsorb CO₂ from ambient air. The adsorber particles are adhered to the shaped flat support medium, wherein the combination of the shaped flat support medium with the adhered adsorber particles is permeable to ambient air.

Advantageously, the filter element is permeable to ambient air. Ambient air may therefore flow through the filter element, increasing the effectiveness of adsorbing carbon dioxide (CO₂), while a pressure drop resulting from the ambient air flowing through the filter element is reduced. Thus, efficiency of the filter element with the proposed combination of the shaped flat support medium with the adhered adsorber particles is improved. The airflow is evenly distributed across the entire filter element to ensure optimal filtration efficiency.

As the support medium is permeable with respect to air, the energy efficiency of the DAC process may be increased because the generation of the air flow requires less energy than guiding CO₂ containing air along solid or compacted adsorber materials.

"Reversibly capturing" includes capturing CO₂, which may at a later point in time, i.e. after being captured, be released in a controlled manner. The capturing of the CO₂ by the filter element is therefore not permanent. In particular, "reversibly capturing" CO₂ may include a cyclic process of capturing CO₂ by the filter element and releasing CO₂ from the filter element. The process of releasing CO₂ from the filter element may include regenerating the adsorber material by a thermal treatment. Adsorber material may comprise one type of adsorber particles and/or multiple types of adsorber particles.

The ambient air may have a temperature range between -40°C to 50°C and a range in humidity between 0% and 100%. The ambient air may comprise a CO₂-concentration ranging from 0.01% to 20%. Therefore, the filter element may be suitable for reversibly capturing CO₂ from a CO₂-point-source. In an embodiment, the filter element is implemented to capture CO₂ from fermentation processes.

The filter element is, for example, configured to be used in a desert, humid, low temperature, high-sulfur, rural, maritime, and/or urban environment.

The shaped flat support medium may be referred to herein as support medium. The support medium may have, in sections, a flat shape. Further, the support medium may be shaped to form the filter element. In particular, the support medium may be porous.

Adsorption is considered a process by which atoms, ions, or molecules from a gas, liquid, or dissolved solid adhere to a surface, forming a thin film of the adsorbate, i.e. CO₂, on the adsorbent, i.e. the adsorber particles. Desorption is considered a process by which atoms, ions, or molecules detach from a surface, reversing the adsorption process. The desorption may occur during regeneration. This involves the adsorbate leaving the adsorbent surface, typically requiring energy to overcome the binding forces. For instance, by applying heat to the adsorber particles, the adsorbed substances can be released from the adsorber particles.

The adsorber particles are, in particular, fixedly adhered to the support medium. The adsorber material may be a bulk material, which may be for example a granulate, spherical bead, or a powder. For example, the adsorber particles are solid particles. The adsorber particles may be adhered to a first surface and/or to a second surface of the support medium. Preferably, the adsorber particles cover, when adhered to the support medium, the first and/or second surface. The adsorber particles may penetrate the support medium. The adsorber particles may be arranged in pores of the support medium, thus intruding into the support medium. Still, the support medium with the adhered adsorber particles is configured to be permeated by an airflow. According to an embodiment, the shaped flat support medium comprises a non-woven structure, a woven structure, a knitted structure, a mesh structure, or a foam structure, or wherein the shaped flat support medium comprises polyolefin, in particular polypropylene. The support medium may be a particle filtration layer. The support medium may comprise synthetic polymers and/or cellulose. The support medium may be produced by any method, such as spunbonded, wet laid, dry laid, or carded.

Advantageously, the support medium comprises an increased surface area, wherein with an increased surface area, more adsorber particles may be adhered to the support medium, therefore increasing the ability of capturing CO₂.

The adsorber particles may be sprayed, spread, applied, or poured onto the support medium, in particular, onto the non-woven structure. The support medium may be impregnated with the adsorber particles.

According to an embodiment, the shaped flat support medium is shaped or formed into a pleated shape.

Advantageously, the surface area is further increased. Further, the support medium may be fit to a given installation space.

In one embodiment, the pleated shape is formed as a zigzag. In one embodiment, the adsorber particles are adhered to the support medium before the support medium is shaped.

According to an embodiment, the adsorber particles comprise an ion exchange resin, in particular, made from a polystyrene-divinylbenzene copolymer with amine functional groups.

Advantageously, the ion exchange resin has an affinity for CO₂, therefore, the ability of capturing CO₂ is increased. Further, polystyrene-divinylbenzene copolymer (PS-DVB) is a stable and durable material, therefore multiple adsorption and desorption cycles are possible.

The PS-DVB may comprise a weak base anion or a strong base anion. In particular, the PS-DVB comprises primary, tertiary and/or quaternary functional groups. The ion exchange resin may comprise a polyethyleneimine, for example, for functionalizing the ion exchange resin. In one embodiment, the ion exchange resin may be shaped as spherical beads. The adsorber particles may further comprise a metal organic framework, zeolite, activated carbon or a silica gel.

According to an embodiment, the adsorber particles are present or adhered on the shaped flat support medium in an amount between 200 g/m² to 1200 g/m², or between 400 g/m² to 1200 g/m², or between 200 g/m² to 600 g/m², or between 400 g/m² to 600 g/m². Where there is a plurality of shaped flat support media, the total grammage of adsorber particles may be in an amount between 200 g/m² to 1200 g/m², or between 400 g/m² to 1200 g/m², or between 200 g/m² to 600 g/m², or between 400 g/m² to 600 g/m².

According to an embodiment, the adsorber particles have a specific surface area according to DIN ISO 9277:2014-01 ranging from $25 \frac{{m}^{2}}{g}$ to $45 \frac{{m}^{2}}{g}$, preferably ranging from $30 \frac{{m}^{2}}{g}$ to $40 \frac{{m}^{2}}{g}$ . Advantageously, the adsorption capacity of the adsorber particles is in-creased.

Preferably, the adsorber particles have a specific surface area of $35 \frac{{m}^{2}}{g}$. In another embodiment, the adsorber particles have a specific surface area of $34 \frac{{m}^{2}}{g}$. The specific surface area may be measured according to the Brunauer-Emmett-Teller (BET) theory. The BET theory describes the adsorption of gas molecules on a solid surface, in particular when multiple layers of a gas are adsorbed to the solid surface. Further, the porosity of the adsorber particles is specified by the BET theory. The BET theory is performed using an inert gas, for example, nitrogen, argon, krypton or CO₂.

According to an embodiment, the adsorber particles have macropores with a pore diameter according to DIN ISO 9277:2014-01 ranging from 45 nm to 70 nm, preferably ranging from 50 nm to 65 nm. Advantageously, the selective capture of CO₂ from ambient air is improved. Preferably, the pore diameter according to DIN ISO 9277:2014-01 is 57 nm.

According to an embodiment, the filter element further comprises further adsorber particles configured to adsorb further gas components from ambient air, the further adsorber particles, in particular comprising a metal organic framework, zeolite, activated carbon or a silica gel, which are adhered to the shaped flat support medium; or the filter element further comprises at least one further shaped flat support medium having further adsorber particles configured to adsorb further gas components from ambient air adhered.

The shaped flat support medium having adsorber particles adhered thereon and the at least one further shaped flat support medium having further adsorber particles may have the same or different characteristics. The shaped flat support medium may have the same or different adsorber particles adhered as the at least one further shaped flat support medium. The shaped flat support medium having adsorber particles adhered thereon may have the same or different grammage of adsorber particles as the at least one further shaped flat support medium.

Advantageously, the further adsorber particles may adsorb further gas molecules comprised by the ambient air, increasing the relative concentration of CO₂ within the ambient air, thus improving the adsorption of CO₂ by the adsorber particles. Further, a modular filter arrangement may be achieved.

The further gas molecules adsorbed by the further particles are, for example, sulfur dioxide (SO₂), ammonia (NH₃), and/or nitrogen oxide (NOₓ). Further, the further adsorber particles may be provided for capturing water molecules from ambient air, thus reducing the humidity of the ambient air, when filtered.

The further adsorber particles may be blended with the adsorber particles for adsorbing CO₂ and adhered together to the support medium. The further adsorber particles may each be adhered to a further support medium, wherein the filter element comprises the support medium and the further support medium.

In one embodiment, the further adsorber particles and the adsorber particles are arranged within the filter element such that the further adsorber particles and the adsorber particles adsorb the further gas molecules and CO₂ one after the other. In other words, the further adsorber particles and the adsorber particles may be arranged in series, being exposed to the ambient air one after the other.

According to an embodiment, the shaped flat support medium comprises polyolefin, in particular polypropylene.

Advantageously, using polyolefin as the support medium, the support medium may be made by a widely available and therefore cheap material, reducing material cost of the support medium.

In another embodiment, the flat shaped support medium comprises polyethylene and/or polybutene.

According to an embodiment, the adsorber particles are adhered by an adhesive, friction, electrostatic discharge, magnets, lamination, coating, and/or impregnation to the shaped flat support medium.

Advantageously, the permeability of the support medium is maintained.

For example, a binder system is provided to connect the adsorber particles. The binder system may be a polymer-based binder system or an inorganic binder system. For example, the binder system comprises epoxy resin, polyurethane, silicone, polymers, silica materials, alumina materials and/or cementitious materials.

In an embodiment, the further support media are laminated, forming the filter element. In particular, the lamination process is continuous.

The flat support medium, e.g. foam, may be impregnated with impregnation material prior to shaping, wherein the impregnation material comprises the binder system and the adsorber particles. Advantageously, the foam is fully penetrated.

According to an embodiment, the filter element comprises multiple layers of shaped flat support media, in particular foam material, wherein the adsorber particles are kept between the multiple layers laminated to one another.

Advantageously, manufacturing of the so formed filter element may be simplified.

In particular, the adsorber particles are encapsulated by the multiple layers of support medium and/or a protection layer. The layers may be laminated by heat-pressing or bonding the multiple layers. The layers may alternatively be adhesively bonded to each other. The layers may be bonded to each other by adhesive lamination. In one embodiment, the filter element comprises a first and a second outer layer, wherein the adsorber particles may be adhered to an outer surface, respectively, of the first and/or second outer layer. In another embodiment, the adsorber particles are adhered to an inside surface of the first and/or second outer layer. The multiple layers are arranged between the first and the second outer layer. The layers may all be similarly shaped or pleated.

In another embodiment, the adsorber particles are adhered by glue to the multiple layers, wherein the first and second outer layer are laminated.

According to an embodiment, the filter element further comprises a shaped protection layer, wherein the adsorber particles are kept between the shaped flat support media and the shaped protection layer.

The filter element may further comprise a protection layer proximate the surface(s) of the shaped flat support medium that the adsorber particles are adhered on. The protection layer may prevent the adsorber particles from shearing off or otherwise dropping out from the shaped flat support medium when, for example, the adhesive loses its strength. The protection layer may be a support medium or further support medium as disclosed herein or a particle filtration layer or a woven or nonwoven fabric layer. The protection layer may be shaped in a manner disclosed herein. The protection layer may not comprise adsorber particles provided thereon. The adsorber particles may be kept between the disclosed shaped flat support media and the shaped protection layer. The protection layer may comprise synthetic polymers and/or cellulose. The support medium or the layers disclosed herein may be produced by any method, such as spunbonded, wet laid, dry laid, or carded.

According to an embodiment, the adsorber particles are adhered on the shaped flat support media in an amount between 200 g/m² to 1200 g/m² and the filter element and/or the flat support medium has a permeability according to DIN EN ISO 9237:1995-12 ranging from $2350 \frac{l}{{m}^{2} ⋅ s}$ to $3150 \frac{l}{{m}^{2} ⋅ s}$, preferably ranging from $2400 \frac{l}{{m}^{2} ⋅ s}$ to $3100 \frac{l}{{m}^{2} ⋅ s}$, more preferably ranging from $2450 \frac{l}{{m}^{2} ⋅ s}$ to $3050 \frac{l}{{m}^{2} ⋅ s}$.

Advantageously, when the filter is in use, ambient air may flow through the filter element, therefore increasing the surface, onto which the CO₂ is adsorbed. The adsorption is therefore improved.

In one embodiment, the support medium has a permeability according to DIN EN ISO 9237:1995-12 ranging from $2350 \frac{l}{{m}^{2} ⋅ s}$ to $3150 \frac{l}{{m}^{2} ⋅ s}$, preferably ranging from $2400 \frac{l}{{m}^{2} ⋅ s}$ to $3100 \frac{l}{{m}^{2} ⋅ s}$, more preferably ranging from $2450 \frac{l}{{m}^{2} ⋅ s}$ to $3050 \frac{l}{{m}^{2} ⋅ s}$. In embodiments, the adsorber particles are present on the shaped flat support medium in an amount between 200 g/m² to 600 g/m², or between 400 g/m² to 600 g/m², and yet, the filter element and/or the support medium can achieve a permeability according to DIN EN ISO 9237:1995-12 ranging from $2350 \frac{l}{{m}^{2} ⋅ s}$ to $3150 \frac{l}{{m}^{2} ⋅ s}$, preferably ranging from $2400 \frac{l}{{m}^{2} ⋅ s}$ to $3100 \frac{l}{{m}^{2} ⋅ s}$, more preferably ranging from $2450 \frac{l}{{m}^{2} ⋅ s}$ to $3050 \frac{l}{{m}^{2} ⋅ s}$.

According to an embodiment, the adsorber particles are configured to desorb the adsorbed CO₂ when a temperature in a range of 50°C to 110°C, preferably in a range of 60°C to 95°C and/or when a pressure in the range of 5 mbar to 500 mbar is applied to an atmosphere surrounding the filter element, filter device or within the filter device.

Advantageously, the CO₂ may be desorbed in an energy efficient way.

The support medium may each have a thickness ranging from 1 mm to 2.5 mm, or from 1.3 mm to 2.3 mm, or from 1.4 mm to 2.1 mm. Advantageously, such thicknesses of the support medium help to spread the heat of desorption, thereby providing efficient desorption.

In embodiments, the adsorber particles are beads and adhered to the support medium such that a specific permeability for ambient air through the combination of the shaped flat support medium and the adhered adsorber particles is obtained.

Compared to filter configurations having packed adsorber beds, the adsorber particles may be spaced within the support medium and do not rub against one another. Thus, mechanical stress and wear on the adsorber material is potentially reduced increasing the lifetime of the filter device.

In one embodiment, the filter element comprises a frame. The frame may be arranged on an outer side or sides of the shaped flat support medium and the other shaped layers (if present). The frame may be arranged around the shaped flat support medium and the other shaped layers (if present). Advantageously, the frame may provide an increased stability to the filter element. The frame may advantageously retain the shape of the shaped layers of the filter element. In other embodiments, the filter element may comprise shape retaining elements that lie across the pleat tips and retain the pleated shape. Suitable shape retaining elements may include glue or plastic strips. The filter element comprising a frame may be termed a panel filter.

According to a second aspect, a filter device is proposed. The filter device comprises one or more filter elements as disclosed herein. Where there is more than one filter element, the filter elements may be selected from other types of filter elements, such as a pre-filter element. The filter device is suitable for use in a plant for direct air capture.

According to an embodiment, the filter device comprises a housing with an inlet and an outlet, wherein the inlet and the outlet are fluidly connected, wherein one or multiple filter elements are arranged within the fluid connection.

In embodiments, a flow path of the ambient air runs between the inlet and the outlet through the filter element within the housing. Advantageously, the housing may form a channel, wherein ambient air may flow though the channel.

In one embodiment, a fan may be configured to provide an airflow through the housing. The filter element(s) may be arranged between the inlet and the outlet, in particular in the flow path. The filter element(s) may be arranged to comprise a pressure side and a suction side. Preferably, the filter element(s) may be arranged so that the ambient air must flow through the filter element(s).

The one or more filter elements may be arranged in a suitable manner depending on where the filter device is to be installed. Where the filter device is to assume a cylindrical shape, the filter element(s) may be wrapped around an axis. Where the filter device comprises a plurality of filter elements, the plurality of the filter elements may be arranged in a V-shape or an N-shape. The plurality of filter elements may alternatively be stacked.

According to an embodiment, the filter device encloses, within a delimiting surface comprised by the filter device, a volume ranging from 0.002 m³ to 0.196 m³, preferably ranging from 0.003 m³ to 0.148 m³. Thus, the filter device may be optimized to prevent large pressure drops when ambient air flows through the filter device.

The delimiting surface may be an outer shell surface of the filter device. In particular, if the filter device comprises one filter element in a pleated shape, the outer shell surface may be the projected surface connecting the pleat tips. The outer shell surface may be an envelope, wrapped around the shaped flat support medium.

In one embodiment, in which the plurality of filter elements is arranged in a V-shape, a stacked shape or an N-shape, the outer shell surface may have a boxy shape comprising a rectangular cross section. For example, the outer shell surface may have a width, a length and a depth, wherein the width is ranging from 550 mm to 640 mm, the length is ranging from 550 mm to 640 mm and the depth is ranging from 250 mm to 340 mm. In another example, the width is ranging from 500 mm to 600 mm, the length is ranging from 220 mm to 320 mm and the depth is ranging from 15 mm to 35 mm. This example may be appropriate for a filter device comprising one panel filter. Where the filter device comprises multiple stacked panel filters, the depth may be multiplied according to the number of stacked panel filters.

In another embodiment, in which the filter element(s) is arranged in a wrapped shape, the outer shell may have a cylindrical shape comprising a circular cross section. Thus, the outer shell may have a height and a radius.

The plant for direct air capture may include multiple filter devices. Advantageously, multiple filter devices may be arranged, comprised of the plant for direct air capture. Therefore, the plant may be highly modular.

The embodiments and features described with reference to the first aspect of the present invention apply mutatis mutandis to the second aspect and the embodiments thereof.

Further possible implementations or alternative solutions of the invention also encompass combinations - that are not explicitly mentioned herein - of features described above or below in regard to the embodiments. The person skilled in the art may also add individual or isolated aspects and features to the most basic form of the invention.

It is understood that features of embodiments disclosed above with respect to one aspect or below with respect to the drawings and claims may also be employed in connection with other aspects of this disclosure.

### Short description of the drawings

Further embodiments, features and advantages of the present invention will become apparent from the subsequent description and dependent claims, taken in conjunction with the accompanying drawings, in which:

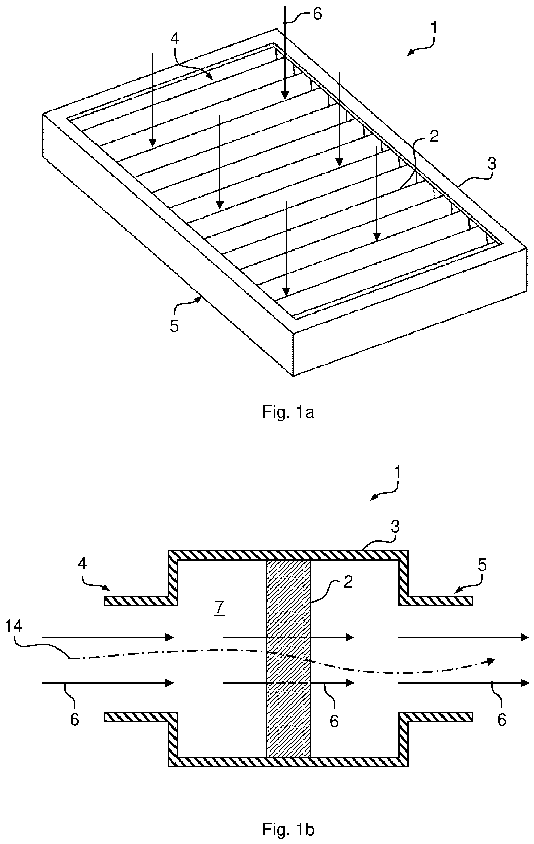

Fig. 1a shows a perspective view of a filter device according to a first embodiment comprising a filter element.
Fig. 1 b shows a schematic view of a cross section of a filter device according to a further embodiment comprising a filter element.
Fig. 2 shows a perspective view of a filter element comprising a shaped flat support medium folded in a zigzag shape.
Fig. 3 shows a schematic detailed view of a section of a shaped flat support medium according to a first embodiment with adsorber particles.
Fig. 4 shows a schematic detailed view of one adsorber particle adhered to a shaped flat support medium.
Fig. 5 shows a schematic detailed view of a section of a filter element according to a further embodiment.
Fig. 6 shows a perspective view of a filter element according to a further embodiment.

In the figures, like or functional-like elements carry the same reference signs if not indicated otherwise.

### Embodiment(s) of the invention

Fig. 1a shows a perspective view of a filter device 1 according to a first embodiment. The filter device 1 comprises a filter element 2 and a housing 3. The housing is implemented as a frame 3 and provides a first opening 4 upstream and a second opening 5 downstream, wherein the second opening 5 is arranged on a backside of the filter device 1. The first and the second opening 4, 5 may also be referred as inlet 4 and outlet 5 for the carbon-dioxide containing air. Optionally, the filter device 1 may comprise a blower device, ventilator and/or fan (not shown) for generating the airflow 6.

If an airflow of ambient air 6, indicated by the multiple arrows pointing downwards, is provided for example by a fan (not shown in Fig. 1a), the airflow of ambient air 6 may flow from the inlet 4 to the outlet 5. The inlet 4 and the outlet 5 are therefore fluidly connected, wherein the frame 3 forms a channel for the airflow of ambient air 6. Between the inlet 4 and the outlet 5, the filter element 2 is arranged. The filter element 2 is arranged, so that the airflow of ambient air 6 passes through the filter element 2. The frame 3 may prevent the airflow of ambient air 6 from bypassing the filter element 2. Therefore, in order for the airflow of ambient air 6 to flow from the inlet 4 to the outlet 5, the airflow of ambient air 6 has to pass through the filter element 2.

Thus, the filter device 1 may have a permeability to the airflow of ambient air 6 according to DIN EN ISO 9237:1995-12 ranging from $2350 \frac{l}{{m}^{2} ⋅ s}$ to $3150 \frac{l}{{m}^{2} ⋅ s}$, preferably ranging from $2400 \frac{l}{{m}^{2} ⋅ s}$ to $3100 \frac{l}{{m}^{2} ⋅ s}$, more preferably ranging from $2450 \frac{l}{{m}^{2} ⋅ s}$ to $3050 \frac{l}{{m}^{2} ⋅ s}$.

Fig. 1b shows a schematic view of a cross section of a filter device 1 according to a further embodiment. The filter device 1 shown in Fig. 1b is similar to the filter device 1 shown in Fig. 1a. In the following, the differences are described.

The housing 3 of the filter device 1 provides, as shown in Fig. 1b, a cavity or interior 7 of the housing 3. The filter element 2 is arranged, in particular removable mounted, inside the cavity 7. Further, the housing 3 comprises, in particular, the inlet 4 and the outlet 5, wherein the airflow of ambient air 6 flows, for example, from the inlet 4 to the outlet 5. The airflow of ambient air 6 runs through the cavity 7 and traverses the filter element 2 along a flow path 14. The filter element 2 may be mounted in a way, so that the airflow of ambient air 6 passes through the filter element 2, indicated by the arrow of the airflow 14 of the ambient air 6 being dashed in the section of the filter element 2. For example, the filter element 2 is mounted lengthwise perpendicular to the airflow of ambient air 6, as shown in Fig. 1b.

The housing 3 may prevent the airflow 14 of ambient air 6 to bypass the filter element 2. Sealings to prevent an airflow circumventing the filter element 2 can be suitably arranged at the interfaces between the housing 3 and the filter element 2.

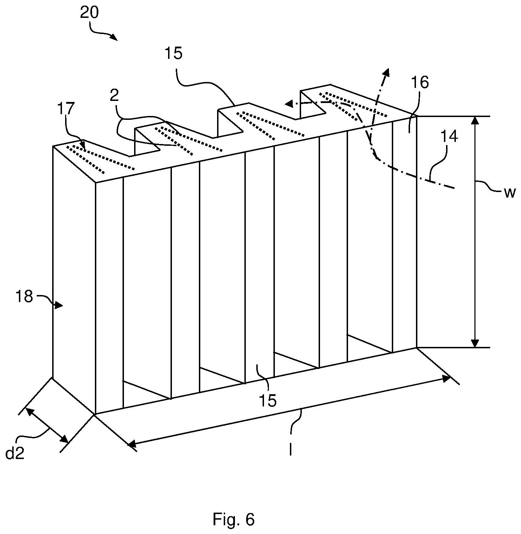

In embodiments not shown in Fig. 1b, further filter elements may be arranged within the cavity 7, which may form a densely packed filter device 1. Preferably, the further filter elements are arranged so that the housing 3 prevents the airflow of ambient air 6 from bypassing the further elements. For example, the airflow 14 runs through a plurality of same or similar filter elements 2 to increase the adsorber capacity. The filter element and further filter elements 2 may be arranged in a shape disclosed herein. In turn, the housing 3 may be of a shape corresponding to where the filter device 1 is to be installed. For example, if the filter device 1 is to be installed in an air duct having a rectangular cross-sectional shape, the housing 3 of filter device 1 may be in the form shown in Fig. 6, or if installed in an air duct having a circular cross-sectional shape, the housing 3 may be cylindrical and the filter element(s) 2 may be wrapped around an axis of the housing 3.

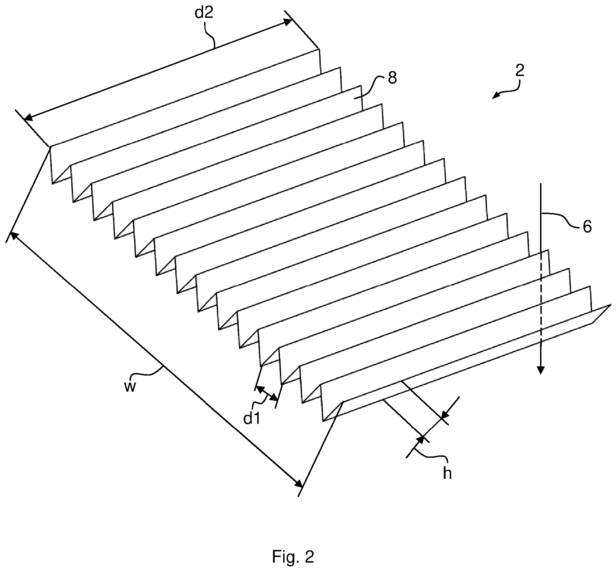

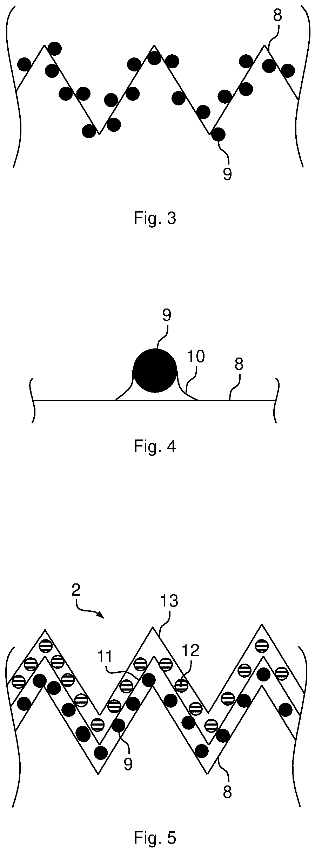

Fig. 2 shows a perspective view of an embodiment of the filter element 2 depicted in Fig. 1. The filter element 2 comprises a shaped flat support medium 8, in the following referred to as support medium, and adsorber particles 9 fixed to the flat medium (see Fig. 3), which will be explained in more detail later. The filter element 2 has a pleated shape, as shown in Fig. 2.

In embodiments, the support medium 8 comprises a non-woven, woven, knitted, mesh or foam structure. For example, the support medium 8 comprise a polyolefin, in particular polypropylene fibers in a meshed or non-woven state. The shape of the filter element 2 is provided by the support medium 8. Therefore, in the embodiment shown, pleats are introduced into the flat support medium 8.

The pleats have a height h, wherein the height h is, for example, measured as the projected vertical of a line connecting the tips of each side of the support medium 8. The pleats may have a constant height h, as shown in Fig. 2. In other embodiments, the pleats may have a varying height h, not shown in Fig. 2. The height h may range from 10 mm to 340 mm. Preferably, the height h may range from 15 mm to 300 mm, or from 15 mm to 100 mm, or from 15 mm to 40 mm.

Further, the pleats of the support medium 8 may have a distance d1 in between them. The distance d1 may be measured in between pleat tips of one side of the support medium 8. The distance d1 may be constant or may vary. For example, the distance d1 may have a range in between 8 mm and 300 mm, preferably between 10 mm and 100 mm, or between 10 mm and 50 mm, even more preferred between 15 mm and 40 mm.

The support medium 8 may define the dimension of the filter element 2. The support medium 8 has, for example, a rectangular shape, having a width w, a height, which, if the height h of the pleats is constant, is equal to the height h, and a depth d2. The depth d2 is, for example, measured along the tip of a pleat.

The support medium 8 is configured to carry the adsorber material (see Figs. 3 -5) for carbon dioxide. The initially flat support medium can be brought into any shape to increase the density of adsorber particles per volume enclosed by the filter element 2, i.e. the combined adsorber material 9 and shaped flat support medium 8. Still, the entire filter element 2 remains air permeable with a predetermined pressure drop along a flow path.

The filter element 2 further comprises the adsorber particles 9. Fig. 3 shows a schematic detailed view of a section of the support medium 8 according to a first embodiment. Adhered to the support medium 8 are the adsorber particles 9.

Fig. 4 shows a schematic detailed view of one adsorber particle 9 adhered to the support medium 8. In the following, reference is made to Fig. 3 and Fig. 4.

The adsorber particles 9, shown in Fig. 3, are adhered to the support medium 8. The adsorber particles 9 may be adhered, in particular fixed, to the support medium 8 on two sides of the support medium 8. In embodiments, the adsorber particles 9 are adhered to only one side of the support medium 8. The adsorber particles 9 may be bulk material, for example a granular or a powder. The adsorber particles 9 are configured to reversibly adsorb CO₂ from the airflow of ambient air 6 (see Fig. 1a and/or Fig. 1b) by adsorption. Shown in Fig. 3 and Fig. 4 are adsorber particles 9 shaped as spherical beads.

The adsorber particles 9 may reach a saturation, wherein the adsorber particles 9 can no longer adsorb CO₂. The adsorber particles 9 are configured to release the adsorbed CO₂, by desorption, when for example heat in a range of 50°C to 110°C is applied. After desorption, the adsorber particles 8 are capable of adsorbing CO₂ again. Thus, the adsorber particles 8 can adsorb and desorb CO₂ in a cyclic process. In other embodiments or additionally, a pressure in the range of 5 mbar to 500 mbar is applied to the adsorber particles 9 to desorb CO₂.

A single adsorber particle 9 is shown in Fig. 4, adhered to the support medium 8. The adsorber particle 9 is adhered by an adhesive 10. The adhesive 10 may be a polyurethane (PU). In other embodiments, the adsorber particles 9 are adhered to the support medium 8 by friction, electrostatic discharge, magnetic forces, lamination or coating. In one embodiment, the support medium 8 has a foam structure, and the adsorber particles 9 are fixed to the foam structure by an impregnation, e.g. soaking the foam or non-woven with a liquid or binder system having dispersed adsorber particles and eventually evaporating the liquid.

For example, in a manufacturing process, not shown in Fig. 4, in a first step, the adhesive 10 may be sprayed onto a surface of the support medium 8. In a second step, the adsorber particles 9 may be applied to the surface, and in a third step, a protection layer (not shown) is laminated over the adhesive 10 and the adsorber particles 9. The particles are kept between the support medium and the protection layer.

The adhesive 10 is, in particular, configured to withstand a temperature of 120°C. Therefore, the adhesive 10 does not melt when excessive heat is applied to the adsorber particles 9. The adhesive 10 may preferably withstand a temperature range between - 40°C and 100°C.

The adsorber particles 9 may be a polystyrene divinylbenzene copolymer (PS-DVB), having a macroporous structure with a pore size according to DIN ISO 9277:2014-01 ranging from 45nm to 70nm, preferably ranging from 50nm to 65nm. The PS-DVB sorbent is available under the product name Lewatit VP OC 1065 from LANXESS Deutschland GmbH shaped as spherical beads and may comprise a functionalized amine group. For example, the functionalized amine group may be primary, tertiary and/or quaternary. In other embodiments, instead of or in addition to the PS-DVB, the adsorber particles 9 may comprise polyethyleneimine (PEI), zeolite, and/or a metal organic framework (MOF). Optionally, the adsorber particles 9 are functionalized with a hydrophobic group, configured to decrease a selectivity towards water.

The adsorber particles 9 may have a size for >90% according to ISO 13320 of all adsorber particles 9 ranging from 0.3mm to 1.25mm. Further, the adsorber particles 9 may have a specific surface area, measured according to the Brunauer-Emmett-Teller (BET) theory of DIN ISO 9277:2014-01 ranging from $25 \frac{{m}^{2}}{g}$ to $45 \frac{{m}^{2}}{g}$, preferably ranging from $30 \frac{{m}^{2}}{g}$ to $40 \frac{{m}^{2}}{g}$. The adsorber particles 9 may have the shape of spheres. The ad-sorber particles 9 have, for example, a minimal total capacity of $2 \frac{eq}{L}$. For example, the absorber particles 9 have a water content ranging from 50% to 75%, preferably from 58% to 66%.

In Fig. 5, a further embodiment of a filter element 2 is shown. The filter element 2 is shown in a detailed view and comprises the downstream support medium 8, the adsorber particles 9, a further shaped flat support medium 11 (further support medium) and further adsorber particles 12, which are shown striped. On top of the further particles 12, a final layer 13 is arranged upstream. The final layer 13 can be seen as a protective layer for the further adsorber particle 12, e.g. to reduce mechanical wear on the adsorber material attached to the underlying support medium 11. The further support medium 11 may be arranged as a layer between the support medium 8 and the final layer 13. Therefore, when the airflow of ambient air 6 (see Fig. 1) is provided to flow through the filter element 2, the airflow of ambient air 6 first flows through the final layer 13, the further support medium 11 and through the support medium 8. Thus, the further adsorber particles 12, configured to adsorb air components other than CO₂, provide for a pre-treated ambient airflow to the first the adsorber particles 9, arranged between the support media 8, 11 and implemented to adsorb the CO₂. It is contemplated that the airflow of ambient air 6 may alternatively be in the reverse direction.

The further air components may be sulfur dioxide (SO₂), Ammonia (NH₃), nitrogen oxides (NOₓ) and/or water. The further adsorber particles 12 may be activated carbon and/or a silica gel. The adsorber particles 9 and the further adsorber particles 12 may be, as mentioned above, adhered by the adhesive 10 (not shown in Fig. 5.) sprayed onto the support medium 8 and/or the further support medium 11. Additionally, the final layer 13 is attached to the support medium 8 and the further support medium 11 by lamination.

In another embodiment, one may dispense with the adhesive 10. The adsorber particles 9 and the further adsorber particles 12 may be applied to the support medium 8 and the further support medium 11. The final layer 13, the support medium 8 and the further support medium 11 are laminated to one another to form the filter element 2. The adsorber particles 9 and the further adsorber particles 11 may be kept in between the support medium 8 and the further support medium 11 by friction. In an embodiment not shown in Fig. 5, the adsorber particles 9 and the further adsorber particles 12 may comprise a mixture of various types of adsorber materials and/or particles, and are adhered to the support medium 8 and the further support medium 11.

Fig. 5 shows the adsorber particles 9 and the further adsorber particles 12 adhered to the support medium 8 and the further support medium 11 separately. One may contemplate that for every type of adsorber particle 9, 12, a dedicated support medium 8, 11 is provided to which the adsorber particles 9, 12 are adhered to.

Fig. 6 shows a schematic and perspective view of a filter device 20 according to an embodiment. The filter device 20 includes a plurality of block-shaped filter elements 2 as shown in Fig. 1a arranged in a V shaped manner 17. In Fig. 6, the downstream side of the furthest left filter element 2 is indicated as 18. Eight filter elements 2 (indicated as dotted lines) are arranged between two lateral sides 15 made of an air-tight material. Further, an upstream side 16 is formed by the same air-tight material, e.g. a shaped and foamed PU sealant. Alternatively, the two lateral sides 15 and/or the upstream side 16 may be made of a filtration material, such as a flat support medium having adsorber particles adhered thereon. Incoming airflow 14 flows through the filter elements 2 from the upstream side 16 to the downstream side 18 along the dotted arrow 14, through the legs of the Vs 17. The four Vs 17 build up to a length I of the filter device 20.

The filter device 20 covers a volume limited by the width w, the depths d2 and the length I. The width w and length I may range from 500 mm to 650 mm, preferably from 530 mm to 620 mm. The depth d2 may range from 200 mm to 650 mm, preferably from 250 mm to 620 mm. Combining several block-shaped filter elements 2 leads to a compact arrangement of adsorber-carrying support media. This can give rise to a balanced density of adsorber material per volume combined with a reasonable pressure drop when the CO₂ containing air is driven through the filter.

Although the present invention has been described in accordance with preferred embodiments, it is obvious for the person skilled in the art that modifications are possible in all embodiments.

According to a further embodiment, the adsorber material may be functionalized zeolite. Further, functionalized zeolite may have a pore structure to improve CO₂ selectivity. In another example, the adsorber particles may be a metal organic framework with a high surface area. Further, the ion exchange resin, the MOF and porous silica may be combined in the filter element. The support medium may be 3D-printed or cast. Further, the adsorber particles may be adhered using a nano coating. Although zig-zag shaped media are shown other shapes are feasible. The disclosed DAC filter devices can be customized and adapted to various housing configurations, implemented as exchangeable modular elements.

### List of reference signs:

- 1: filter device
- 2, 20: filter element
- 3: frame, housing
- 4: first opening, inlet
- 5: second opening, outlet
- 6: airflow of ambient air
- 7: cavity
- 8: shaped flat support medium
- 9: adsorber particle
- 10: adhesive
- 11: further shaped flat support medium
- 12: further adsorber particles
- 13: final layer
- 14: flow path
- 15: lateral side
- 16: front side, upstream side
- 17: V arrangement
- 18: downstream side

- d1: distance
- d2: depth
- h: height
- w: width
- I: length

## Claims

1. A filter element (2) for reversibly capturing carbon dioxide, CO₂, from ambient air (6), the filter element (2) comprising:
- a shaped flat support medium (8); and
- adsorber particles (9), configured to adsorb CO₂ from ambient air (6);
wherein the adsorber particles (9) are adhered to the shaped flat support medium (8),
wherein the combination of the shaped flat support medium (8) with the adhered adsorber particles (9) is permeable to ambient air (6).

2. The filter element (2) of claim 1, wherein the shaped flat support medium (8) comprises a non-woven structure, a woven structure, a knitted structure, a mesh structure, or a foam structure, or wherein the shaped flat support medium (8) comprises polyolefin, in particular polypropylene.

3. The filter element (2) of claim 1 or 2, wherein the shaped flat support medium (8) is shaped into a pleated shape.

4. The filter element (2) of one of claims 1 to 3, wherein the adsorber particles (9) comprise an ion exchange resin, in particular, made from a polystyrene-divinylbenzene copolymer with amine functional groups.

5. The filter element (2) of one of claims 1 to 4, wherein the adsorber particles (9) have a specific surface area according to DIN ISO 9277:2014-01 ranging from $25 \frac{{m}^{2}}{g}$ to 45 $\frac{{m}^{2}}{g}$, preferably ranging from $30 \frac{{m}^{2}}{g}$ to $40 \frac{{m}^{2}}{g}$.

6. The filter element (2) of one of claims 1 to 5, wherein the adsorber particles (9) have macropores with a pore diameter according to DIN ISO 9277:2014-01 ranging from 45 nm to 70 nm, preferably ranging from 50 nm to 65 nm.

7. The filter element (2) of one of claims 1 to 6, further comprising further adsorber particles (12) configured to adsorb further gas components from ambient air (6), the further adsorber particles (12), in particular comprising a metal organic framework, zeolite, activated carbon or a silica gel, which are adhered to the shaped flat support medium (8); or the filter element (2) further comprising at least one further shaped flat support medium (11) having further adsorber particles (12) configured to adsorb further gas components from ambient air (6) adhered.

8. The filter element (2) of one of claims 1 to 9, wherein the adsorber particles (9) are adhered by an adhesive (10), friction, electrostatic discharge, magnets, lamination, coating, and/or impregnation to the shaped flat support medium (8).

9. The filter element (2) of one of claims 1 to 8, wherein the filter element (2) comprises multiple layers of shaped flat support media (8, 11), in particular a foam material, wherein the adsorber particles (9, 12) are kept between the multiple layers laminated to one another.

10. The filter element (2) of one of claims 1 to 9, wherein the filter element (2) further comprises a shaped protection layer, wherein the adsorber particles (9, 12) are kept between the shaped flat support media (8, 11) and the shaped protection layer.

11. The filter element (2) of one of claims 1 to 10, wherein the adsorber particles (9, 12) are adhered on the shaped flat support media (8, 11) in an amount between 200 g/m² to 1200 g/m² and the filter element (2) and/or the flat support medium (8) has a permeability according to DIN EN ISO 9237:1995-12 ranging from $2350 \frac{l}{{m}^{2} ⋅ s}$ to $3150 \frac{l}{{m}^{2} ⋅ s}$, preferably ranging from $2400 \frac{l}{{m}^{2} ⋅ s}$ to $3100 \frac{l}{{m}^{2} ⋅ s}$, more preferably ranging from 2450 $\frac{l}{{m}^{2} ⋅ s}$ to $3050 \frac{l}{{m}^{2} ⋅ s}$.

12. The filter element (2) of any of claims 1 to 11, wherein the adsorber particles (9) are configured to desorb the CO₂ when a temperature in a range of 50°C to 110°C, preferably in a range of 60°C to 95°C and/or when a pressure in the range of 5 mbar to 500 mbar is applied; and wherein the support media (8, 11) each has a thickness ranging from 1 mm to 2.5 mm.

13. A filter device (1) comprising a filter element (2) according to any one of claims 1 to 12, wherein the filter device (1) is suitable for use in a plant for direct air capture.

14. The filter device (1) of claim 13, further comprising a plurality of filter elements (2) and a housing (3) with an inlet (4) and an outlet (5), wherein the inlet (4) and the outlet (5) are fluidly connected, wherein the plurality of filter elements (2) is arranged within the fluid connection in a V-shape or an N-shape.

15. The filter device (1) of claims 13 or 14, wherein the filter device (1) encloses, within a delimiting surface comprised by the filter device, a volume ranging from 0.002 m³ to 0.196 m³, preferably ranging from 0.003 m³ to 0.148 m³.
